# EUROPEAN PATENT APPLICATION

(11) **EP 4 421 024 A1**
(43) Date of publication of application: **28.08.2024**
(21) Application number: 22797807.9
(22) Date of filing: 18.10.2022
(51) Int. Cl.: C01B 3/04, C01B 3/50, B01D 53/02, B01D 53/04, B01J 19/08

(54) **HYDROGEN GENERATION DEVICE**

(30) Priority: 22.10.2021 ES 202130995
(71) Applicant: Hidrogmar Ros Roca SLU, 42320 Langa de Duero Soria (ES)
(72) Inventor: ROCA ENRICH, Salvador, 42320 Langa de Duero (Soria) (ES)
(74) Representative: Sahuquillo Huerta, Jesús
(86) International application number: PCT/ES2022/070657
(87) International publication number: WO 2023/067217

(57) **Abstract**

A device for generating hydrogen (100) from water in a liquid state comprising a hydrolysis chamber (101) which is configured to contain a variable volume of water in a liquid state at ambient temperature and atmospheric pressure, this volume of water being the element processed to obtain hydrogen and other gases by the implosion of a plurality of bubbles generated inside the hydrolysis chamber (101) due to a change in pressure conditions; and a second gas chamber (110) separated from the first hydrolysis chamber (101) by means of gas separation means (106,107); and wherein said second gas chamber (110), in its upper part, comprises a gas outlet (103) configured to facilitate the exit of the gases resulting from the process.

## Description

### Technical field

The present invention relates to a device for the generation of gaseous hydrogen from liquid water, the operating principle of which is based on the radiation of water with wave signals configured to break the water molecule.

### Prior art

Hydrogen and energy production are concepts that have been researched over the last decades. At present, almost all hydrogen production comes from fossil fuels, which is a highly polluting process due to the emission of harmful gases and carbon dioxide, which is the gas directly related to the greenhouse effect.

The fact of using fossil fuels lies in the fact that known methods, such as water electrolysis, cannot be applied due to their high economic cost, since the hydrogen generated produces less energy than that used to obtain it, making this process logically unfeasible.

One of the technical problems to be solved in the current state of the art is to obtain a system that can carry out the electrolysis process efficiently. For this purpose, electrodes based on alloys made of precious metals or metals of high economic value are used, so that, although the electrolysis process may be economically viable, the cost of the alloys that make up the electrodes makes these processes unfeasible. On the other hand, processes with cheaper electrodes do not offer acceptable yields.

On the other hand, alternative technologies for hydrogen generation are described in the state of the art that attempt to solve the problem of electrolysis efficiency. However, when scaling up from the laboratory phase to the industrial production phase, the complexity of the necessary facilities makes this technology unfeasible as a practical generation system.

For example, WO2010/002781 describes a method and apparatus for generating hydrogen gas as H2 from a hydrogen-containing liquid, such as water. In one embodiment, the structure is an electrolytic cell configured with catalytic enhancements to maximise the volume and mass of hydrogen produced, and minimise energy input, thereby minimising the cost of operation. This device is particularly configured to catalytically enhance the decomposition of water and the formation of hydrogen gas by:
a. the configuration of the electric and magnetic field container apparatus;
b. the use of sonochemistry and cavitation; and
c. the use of applicable solutes and solvents in the device that change the pH, ionic state, and chemical potential of the device solution.

WO02/46092 describes that the subject matter of this document is a facility for receiving hydrogen and/or oxygen from a hydrogen or hydrogen-oxygen containing liquid, hereinafter referred to as "Basic Feedstock", by initiating cavitation therein. The essential attributes of a facility are the availability of the following elements:
a. a container in which the Raw Material is contained;
b. a cavitation generator, which initiates cavitation in the Basic Raw Material;
c. a power source for a cavitation generator;
d. a device (devices) for capturing hydrogen and/or oxygen.

The installation ensures an opportunity for an economical and ecologically safe method of receiving hydrogen and/or oxygen and can be used in different spheres of human activity, where it is necessary to use hydrogen and/or oxygen.

Thus, the current state of the art does not describe methods and/or devices for hydrogen production that are economically viable and that can perform acceptably on an industrial scale.

### Summary of the invention

The present invention aims to solve the drawbacks indicated in the state of the art by means of a technology based on electromagnetic waves generated at certain frequencies and which enable a reaction based on the cavitation principle to be carried out, but in a controlled manner. It is another object of the invention to generate a plurality of gases from water in a liquid state with an efficient yield, using for this purpose a hydrolysis chamber designed for this purpose.

Thus, the subject matter of the present invention consists of a device for generating hydrogen in a gaseous state from a source of water in a liquid state and comprising at least one filter for collecting the hydrogen generated from the mixture of gases produced in the hydrolysis chamber. This object is achieved by the device of the claims accompanying this description.

In a first aspect of the invention, a gaseous hydrogen filter is claimed which is characterised in that it consists of a metal hydride plate through which an electric current flows in a certain direction or polarity, such that the gaseous hydrogen is trapped in the metal hydride plate when the electric current flows in a certain polarity and the hydrogen is released from the metal hydride plate when the current flows in the opposite polarity, remaining in the plate in the absence of current. In one practical embodiment, the metal hydride is nickel (Ni).

In a second aspect of the invention, the gaseous hydrogen generation device comprising:
a hydrolysis chamber that is configured to contain a variable volume of water in a liquid state at ambient temperature and atmospheric pressure, this volume of water being the element processed to obtain hydrogen and other gases by the implosion of at least one bubble generated in the water contained in the chamber; and
a second gas chamber separated from the first hydrolysis chamber by means of gas separation means; and wherein said second gas chamber, in its upper part, comprises a gas outlet configured to facilitate the exit of the gases resulting from the process;
characterised in that
the hydrogen generation device comprises electromagnetic wave generation means and a vacuum system that are configured to generate variable pressure conditions per unit time inside the first hydrolysis chamber until the implosion of at least one bubble generated in the water contained inside the first hydrolysis chamber due to variations of the internal pressure conditions of the hydrolysis chamber.

In a practical embodiment, the gas separation means comprise at least one gaseous hydrogen filter according to the first aspect of the invention.

In a practical embodiment, the hydrolysis chamber comprises at least one water inlet configured to receive, continuously or in batches, the liquid water to be dissociated.

In another practical embodiment, the electromagnetic wave generation means are configured to generate at least one electromagnetic wave optimised to produce an adiabatic compression inside the hydrolysis chamber, wherein the distance between the valley and the crest of the generated wave is equal to or less than 0.05 seconds.

In another practical embodiment, the frequencies of the electromagnetic waves generated in the electromagnetic wave generating media are between 20 KHz and 3 GHz.

In another practical embodiment, the waveform generated in the electromagnetic wave generating means is a sine wave but with a limitation on the rise in a range between 10% and 40% of the peak amplitude of the sine wave.

The hydrogen gas production facility according to the invention comprises an electrical power supply, a hydrogen gas generating device, a water supply system supplying water to the generating device, a collection system for gases generated in the generating device, a system for filtering and storing the hydrogen gas, wherein the generating device is the generating device with the main features and, where applicable, one or more of the optional or preferred features described above, and wherein the electrical power supply is also connected to the wave engine generator through the electronic control module.

The power supply of the system may comprise a battery supplying electrical power to the electronic control module and a photovoltaic or other renewable energy system supplying electrical power to the battery. Notwithstanding the above, the system can operate with direct or alternating currents as the electrical supply input.

The hydrogen gas production plant may also comprise additional conventional elements such as gas and water pressure sensors, electrical sensors, an electrical overload protection system, shut-off and safety valves, pumps pumping hydrogen gas and oxygen gas to their respective tanks, a water pump for pumping water from the water supply tank to the generating device, and a water pump for pumping water from the water supply tank to the generating device.

Throughout the description and the claims, the word "comprises", and variants thereof are not intended to exclude other technical features, additives, components, or steps. To those skilled in the art, other objects, advantages, and features of the invention will be apparent in part from the invention and in part from the practice of the invention. The following examples and drawings are provided by way of illustration and are not intended to restrict the present invention. Furthermore, the invention covers all possible combinations of particular and preferred embodiments indicated herein.

### Brief description of the drawings

The following is a very brief description of a series of drawings which help to better understand the invention, and which relate expressly to an embodiment of the invention, which is illustrated as a non-limiting example of the invention.

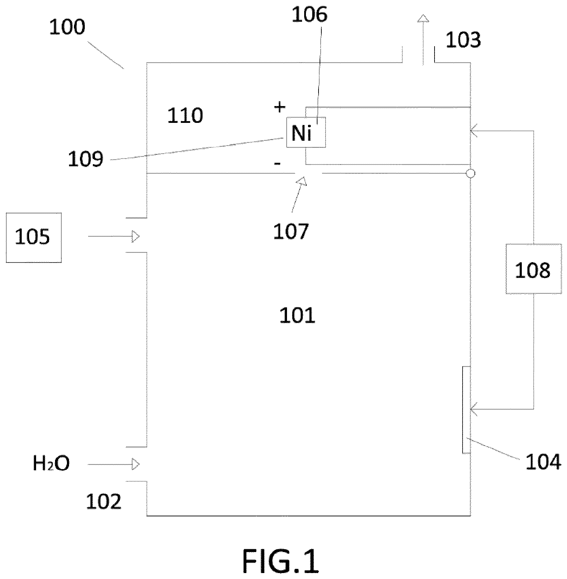

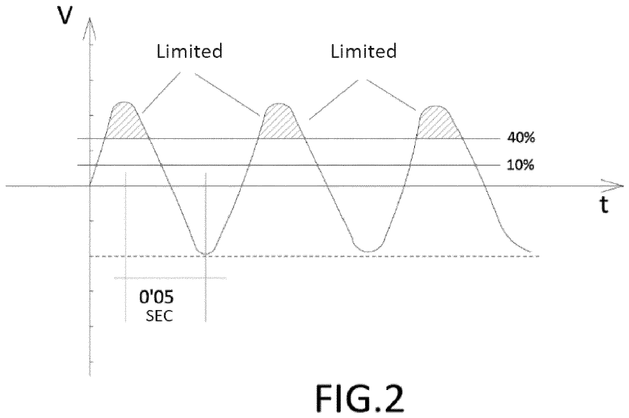

FIG.1 shows a schematic of the hydrogen generation device according to the present invention. FIG.2 shows an electromagnetic waveform of the type employed in the present invention.

### Explanation of a detailed embodiment of the invention

According to the attached figures, in an example of a practical embodiment of the invention, the generating device 100 comprises a hydrolysis chamber 101 which is configured to contain a variable volume of water in liquid state, this volume of water being the element to be processed by the generating device 100 to obtain hydrogen (H₂) and other gases resulting from the reaction inside the chamber 101. The generating device 100 further comprises a second gas chamber 110 separated from the first hydrolysis chamber 101 by means of the gas separation means 106,107. In said second gas chamber 110, in its upper part, the generating device 100 comprises a gas outlet 103 configured to facilitate the exit of the gases resulting from the process, as will be described below.

The hydrolysis chamber 101 comprises at least one water inlet 102 for receiving - continuously or in batches - the water to be dissociated. Inside the first hydrolysis chamber 101 there are electromagnetic wave generation means 104 which are connected to an electronic control module 108 which, in a practical non-limiting embodiment, comprises at least one processor or processors and a memory or memories which store a program or programs consisting of a plurality of instructions which, when executed by the processor or processors cause the electronic control module 108 to generate the electromagnetic waves required in power, frequency and form to carry out the effect of generating gases from the water contained in the hydrolysis chamber 101.

On the other hand, the vacuum system 105 is configured to generate minimum pressure conditions inside the first hydrolysis chamber 101, although it can also generate pressures higher than the minimum pressure, such that the vacuum system 105 is configured to create variable pressure conditions per unit of time.

The process of breaking a water molecule consists - essentially - of providing a sufficient amount of energy to break the bonds between atoms, so that the atom is isolated in the form of an ion. In order to execute this process, it is not necessary that all the energy is provided exogenously, but there can also be an endogenous supply of energy, as described in the present invention.

As indicated above, various ways of breaking water molecules are known in the state of the art, such as the use of precision lasers or the input of energy to the water mass in the form of heat. However, the present invention produces changes in the pressure conditions of the environment to cause a series of thermodynamic processes in the medium, as will be described below.

First, the water contained in the hydrolysis chamber 101 is in a liquid state, at atmospheric pressure and room temperature. The water is then subjected to a rapid pressure change by means of the vacuum system 105, but also by generating electromagnetic waves 104 with a given frequency, peak amplitude and power, thereby generating a negative pressure environment in at least a marginal region of the hydrolysis chamber 101. In the present disclosure, marginal region means at least an area close to the walls of the hydrolysis chamber 101.

Negative pressures in the marginal regions cause a cavity generation process, i.e. water at atmospheric pressure and ambient temperature that is in a liquid state changes to a gaseous state forming (at least) one bubble. As long as the pressure is kept at negative values (e.g., when the electromagnetic wave depicted in Figure 2 is in the valley zone), the cavities grow at a certain rate. As soon as the combined conditions of the vacuum system 105 and the EM wave generator 104 drive the hydrolysis chamber 101 towards higher pressures, the bubble growth will suddenly change. In other words, its aqueous membrane can no longer grow, and an opposite effect occurs, causing a reversal of the movement of the bubble's aqueous membrane and, therefore, an implosion of the bubble. It is at this instant that a chemical reaction is generated inside the cavity (i.e., the bubble) that forms gases at very high temperatures in very short intervals of time.

The shape of the electromagnetic wave (Figure 2) generated by the EM wave generating means 104 is optimised to produce an adiabatic compression inside the hydrolysis chamber 101, for which the distance between the valley and the crest of a generated wave is equal to or less than 0.05 seconds. In a practical embodiment of the invention, the frequencies of the EM waves generated in the EM wave generating means 104 are between 20 KHz and 3 GHz. In turn, the waveform produced is preferably a sine wave but with a limitation on the rise (i.e., on the crest of the wave) or in other words, with a limit on the generation of higher pressures within the hydrolysis chamber 101.

Through this wave mechanism, the cavities formed implode at the optimum time which necessarily involves maximum temperature and gas generation. In a practical embodiment of the invention, the maximum amplitude values of the wave are in a range between 10% and 40% of the peak amplitude of the sine wave.

In this thermodynamic process, the pressure-temperature relationship must be maintained, so that a sharp reduction in the volume of the bubble implies a sharp increase in the temperature of the gases contained in the bubble. Thus, the temperature increase is achieved by absorbing energy from the surroundings, so that the gases in the bubble heat up by absorbing energy from the surrounding liquid water, resulting in a cooling of the liquid water and a heating of the gases contained in the bubble.

The energy absorbed from the medium allows the thermochemical conditions inside the bubble to be adapted to the process of breaking down the water molecules, producing in these phases a large amount of hydrogen and oxygen in gaseous state, as well as other gases depending on the exact composition of the water contained in the hydrolysis chamber 101. The indicated process, in summary, is similar to a boiling process that is achieved by changes in the pressures of the water in the hydrolysis chamber 101.

Therefore, the present invention has the particularity that the only energy to be supplied to the device 100 is that necessary for the wave generator 104, the vacuum system 105 and for the gas separation means 106,107 to isolate the hydrogen, as described below.

A very important point of the invention is the capture of the generated hydrogen. For this purpose, gas separation means 106,107 are employed. Since the gases generated by the implosion of the bubbles inside the hydrolysis chamber 101 rise vertically, it is necessary to implement a filter 106 arranged in the upper part of the hydrolysis chamber 101, separating this first chamber 101 from the second gas chamber 110. The filter 106 comprises an inlet 107 which is an orifice that communicates the reactor part (the chamber 101) with the filter 106, in such a way that the resulting gas rises from the chamber 101 to the filter 106 passing through the inlet or orifice 107.

The filter 106 consists of a plate whose material is a metal hydride. In a practical non-limiting embodiment, nickel (Ni). An electric current flows through the plate in a certain direction or polarity. In this way, the hydrogen is trapped in the filter plate 106 while the rest of the gases exit through the gas outlet 103.

The hydrogen captured in the filter 106 can be released by changing the polarity, i.e., reversing the direction of current flow, for example, by means of instructions stored in memory and executed by the processor of the control device 108. Thus, alternative hydrogen/oxygen release cycles can be established in the filter 106, or by means of the signal received by a hydrogen sensor 109, such that when the presence of H₂ in the filter 106 exceeds a certain threshold measured in ppm, a signal is sent to the control device 108 to change polarity.

Finally, in one embodiment of the invention, the filter 106 discussed above can also act as a hydrogen storage system and can be transported by simply removing the circulating stream. Thus, the filter 106 discussed above will be modular, being easily detachable from the hydrolysis chamber 101, allowing hydrogen to be transported efficiently.

## Claims

1. A hydrogen gas filter (106) **characterised in that** it consists of a metal hydride plate through which an electric current flows in a certain direction or polarity, such that the hydrogen gas is trapped in the metal hydride plate when the electric current flows in a certain polarity and the hydrogen is released from the metal hydride plate when the current flows in the opposite polarity, remaining in the plate in the absence of current.

2. The hydrogen filter (106) according to claim 1 wherein the metal hydride is nickel (Ni).

3. A gaseous hydrogen generation device (100) comprising:
a hydrolysis chamber (101) that is configured to contain a variable volume of water in a liquid state at ambient temperature and atmospheric pressure, this volume of water being the element processed to obtain hydrogen and other gases by the implosion of at least one bubble generated in the water contained in the chamber; and
a second gas chamber (110) separated from the first hydrolysis chamber (101) by means of gas separation means (106,107); and wherein said second gas chamber (110), at its upper part, comprises a gas outlet (103) configured to facilitate the exit of the gases resulting from the process;
**characterised in that**,
comprises electromagnetic wave generation means (104) and a vacuum system (105) which are configured to generate variable pressure conditions per unit time inside the first hydrolysis chamber (101) until the implosion of at least one bubble generated in the water contained inside the first hydrolysis chamber (101) due to variations of the internal pressure conditions of the hydrolysis chamber (101).

4. The device according to claim 3 wherein the gas separation means comprises at least one hydrogen gas filter (106) according to claim 1 or 2.

5. The device according to any one of claims 3 or 4 wherein the hydrolysis chamber (101) comprises at least one water inlet (102) configured to receive, continuously or in batches, the liquid water intended to be dissociated.

6. The device according to any one of claims 3 to 5 wherein the electromagnetic wave generation means (104) are configured to generate at least one electromagnetic wave optimised to produce an adiabatic compression inside the hydrolysis chamber (101), wherein the distance between the valley and the crest of the generated wave is equal to or less than 0.05 seconds.

7. The device according to any one of claims 3 to 6 wherein the frequencies of the electromagnetic waves generated in the electromagnetic wave generating means (104) are between 20 KHz and 3 GHz.

8. The device according to any one of claims 3 to 6 wherein the waveform generated in the electromagnetic wave generating means (104) is a sine wave but with a limitation on the rise in a range between 10% and 40% of the peak amplitude of the sine wave.
